# EUROPÄISCHE PATENTSCHRIFT

(11) **EP 0 923 446 B1**
(45) Veröffentlichungstag und Bekanntmachung des Hinweises auf die Patenterteilung: **18.04.2001**
(21) Anmeldenummer: 97933608.8
(22) Anmeldetag: 13.08.1997
(51) Int. Cl.: B29C 49/46

(54) **VERFAHREN ZUR HERSTELLUNG VON STRECKBLASGEFORMTEN KUNSTSTOFFBEHÄLTERN**
PROCESS FOR PRODUCING STRETCH BLOW FORMED PLASTIC CONTAINERS
PROCEDE DE FABRICATION DE CONTENANTS EN PLASTIQUE PAR FORMAGE AVEC ETIRAGE-GONFLAGE

(30) Priorität: 14.08.1996 CH 199796
(43) Veröffentlichungstag der Anmeldung: 23.06.1999
(73) Patentinhaber: Tetra Laval Holdings & Finance SA, 1009 Pully (CH)
(72) Erfinder: MOCK, Elmar, CH-2504 Bienne (CH); BERGHOLTZ. Lars, 26354 Höganäs (SE)
(74) Vertreter: Frei, Alexandra Sarah
(86) Internationale Anmeldenummer: CH9700296
(87) Internationale Veröffentlichungsnummer: WO9806559

(56) Entgegenhaltungen:
- US-A- 5 049 330
- PATENT ABSTRACTS OF JAPAN vol. 5, no. 76 (M-155) [69] , 20.Mai 1981 & JP 56 027329 A (YOSHINO), 17.März 1981,
- PATENT ABSTRACTS OF JAPAN vol. 5, no. 76 (M-155) [69] , 20.Mai 1981 & JP 56 027330 A (YOSHINO), 17.März 1981,

## Beschreibung

Die Erfindung liegt auf dem Gebiete der Kunststoffverarbeitung und betrifft ein Verfahren gemäss dem Oberbegriff des unabhängigen Patentanspruchs. Das Verfahren dient zur Herstellung von Kunststoffbehältern durch Streck-Blas-Formen. Die Kunststoffbehälter bestehen aus einem für Streck-Blas-Formung geeigneten Kunststoff und sind beispielsweise Flaschen aus Polyethylenterephthalat (PET).

PET-Behälter, insbesondere Flaschen aus diesem Material, werden üblicherweise durch Streck-Blas-Formen hergestellt. Dabei wird in den meisten Fällen von einem durch Spritzgiessen hergestellten Vorformling ausgegangen. Der Vorformling hat üblicherweise einen Durchmesser, der kleiner ist als der Durchmesser der zu erstellenden Flasche, eine axiale I-änge, die kleiner ist als die axiale Länge der zu erstellenden Flasche, und einen Öffnungsbereich (beispielsweise mit Gewinde und Halsring), der bereits die Form des Öffnungsbereiches der zu erstellenden Flasche hat. Der Vorformling wird auf eine für den Streck-Blas-Prozess geeignete Temperatur erwärmt und in eine Form eingebracht, welche Form dem zu erstellenden Behälter entspricht. In dieser Form wird der Vorformling durch einen axial eingeführten Stempel axial gestreckt, wobei mit einem Innendruck im Bereiche von ca. 5 bis 10 bar (Streckdruck) dafür gesorgt wird, dass sein Durchmesser dabei ebenfalls zunimmt. Wenn der Vorformling genügend gestreckt ist, das heisst, der Streckstempel seine vorgegebene Position erreicht hat, wird der Innendruck erhöht, üblicherweise bis in einen Bereich von 40 bis 50 bar (Blasdruck), wodurch der Vorformling ganz gegen die Form gepresst wird und dadurch die Form der zu erstellenden Flasche erhält.

Der für das Streck-Blas-Formen notwendige Vordruck (Streckdruck) wird üblicherweise dadurch erzeugt, dass das Innere des Vorformlings mit einem Pressluftnetz verbunden wird. Für die Erzeugung des Blasdruckes wird ein spezieller Druckluftbehälter mit Pumpe vorgesehen, der wegen der Höhe des Druckes verschärften Sicherheitsvorschriften unterliegt und aus diesem Grunde einen beträchtlichen Investitionsaufwand darstellt.

Es ist auch bekannt, streckblasgeformte Flaschen oder Behälter, die nach der Formung noch in der Blasform positioniert sind, thermisch zu behandeln dadurch, dass sie mit einer explosiven Gasmischung gefüllt werden und die Gasmischung gezündet wird. Derartige Verfahren sind beschrieben in den Publikationen JP-A-5627329 und JP-A-5627330.

Sollen die streck-blas-geformten Flaschen oder Behälter für Lebensmittel oder Pharmazeutika verwendet werden, werden sie vor dem Füllen einem Sterilisationsprozess unterzogen, das heisst, im wesentlichen von lebenden Organismen und Keimen befreit Dabei werden sie mit sterilisierend wirkenden (für die zu beseitigenden Organismen giftigen) flüssigen oder gasförmigen Chemikalien (meist starke Oxidationsmittel) behandelt oder sie werden auf eine Temperatur erhitzt, bei der die Organismen nicht überleben können, oder sie werden bestrahlt, beispielsweise mit ultravioletem Licht. Es sind auch Sterilisationsmethoden bekannt, in denen Plasma-unterstützte Prozesse zur Sterilisation von Behältern angewendet werden.

Die hauptsächlichen Nachteile der Sterilisationsmethoden mit sterilisierenden Gasen oder Flüssigkeiten, wie beispielsweise Ethylenoxid, Propylenoxid, Chlordioxid, Wasserstoffsuperoxid, Stickstoffdioxid oder Schwefeldioxid bestehen darin, dass diese Stoffe auch für den Menschen giftig sind und aus diesem Grunde bei der Sterilisation besondere Massnahmen ergriffen werden müssen, um Kontakt mit den Stoffen zu vermeiden. Ferner besitzen diese Stoffe zum Teil unerwünschte Aromen, sodass sie auch deswegen nach der Sterilisation sorgfältig aus den Behältern entfernt werden müssen. Verschiedene dieser Stoffe sind unter bestimmten Umständen auch explosiv, was gemäss dem Stande der Technik als nachteilig empfunden wird.

Der hauptsächliche Nachteil der Sterilisation mittels Hitze besteht darin, dass sie sehr energieintensiv ist und dass sie eine lange Zeit (Behandlungszeit plus Abkühlungszeit) erfordert. Dieser Nachteil kann dadurch abgeschwächt werden, dass mit einem Thermoschock sterilisiert wird, wie dies beispielsweise in der Patentschrift DE-2915659 beschrieben ist. Dabei werden die zu sterilisierenden Gegenstände einem schnellfliessenden Strom von feuchter Luft mit einer Temperatur von über 500°C ausgesetzt. Mit dieser Methode wird eine Sterilisation in ca. zwei Sekunden erreicht und die Abkühlzeit ist verglichen mit traditionellen Ernitzungsmethoden sehr kurz, da nur die Oberfläche der zu sterilisierenden Gegenstände heiss wird. Es dürfte jedoch schwierig sein, sicher zu stellen, dass wirklich jede Oberflächenstelle der zu sterilisierenden Gegenstände eine für eine Sterilisation genügend hohe Temperatur erreicht.

Die Erfindung stellt sich nun die Aufgabe, ein Verfahren zur Herstellung von Kunststoffbehältern durch Streckblasformen aufzuzeigen, welches Verfahren gegenüber derartigen Verfahren gemäss dem Stande der Technik einfacher ist und in welches Verfahren sich ohne Mehraufwand eine gegebenenfalls notwendige Sterilisation der Innenoberflächen der hergestellten Behälter integrieren lässt.

Diese Aufgabe wird gelöst durch das Verfahren zur Herstellung von Kunststoffbehältern wie es durch die Patentansprüche definiert ist.

Gemäss dem erfindungsgemässen Verfahren wird von einem gleichen Vorformling ausgegangen und wird dieser Vorformling in eine Form eingebracht und durch einen Stempel in axialer Richtung gestreckt wie dies gemäss dem Stande der Technik üblich ist. Anstatt aber den Streckdruck und den Blasdruck mit Hilfe von Pressluft zu erzeugen, wie dies gemäss dem Stande der Technik üblich ist, wird zur Erzeugung des Streckdruckes ein explosives Gasgemisch in den Vorformling gepresst. Sobald der Vorformling in gewünschtem Masse gestreckt ist, d.h. der Streckstempel eine vorgegebene Position erreicht hat, wird das explosive Gasgemisch mit geeigneten Mitteln gezündet. Dadurch explodiert das Gasgemisch und erzeugt einen Druck- und einen Temperaturschock, die derart ausgelegt werden, dass ein für das Blasen genügender Druck entsteht und eine für die Oberflächensterilisation genügende Temperatur. Da der Druckschock nur eine sehr kurze Zeit anhält und dabei des Volumen des Behälters in einem beträchtlichen Masse zunimmt, kann es vorkommen, dass der nach der Explosion im Behälter herrschende Druck nicht genügt, um ein nachexplosives Schrumpfen zu verhindern. In derartigen Fällen ist es notwendig, unmittelbar nach der Explosion weiter Gas in den Behälter zu führen und den Druck bis zu einer völligen Stabilisation des Behältermaterials im Bereiche des Streckdruckes zu halten.

Gegenüber dem Stande der Technik erübrigen sich also die externe Erzeugung des hohen Blasdruckes und eine gegebenenfalls notwendige, an die Streckblasfomung anschliessende Sterilisation. Der nach dem erfindungsgemässen Verfahren hergestellte Behälter kann unmittelbar, vorteilhafterweise in derselben Anordnung von Vorrichtungen und unter sterilen Verhältnissen einem Füllschritt zugeführt werden, wo er befüllt und verschlossen wird.

Die mit einer Explosion erzeugbaren Temperaturen sind relativ zur freiwerdenden Energie sehr hoch, das heisst, dass wirklich nur die inneren Oberflächen des Kunststoffbehälters erhitzt und dadurch sterilisiert werden, sodass auch Behälter aus relativ Temperatur-empfindlichen Materialien in dem Verfahren keinen Schaden nehmen. Es ist möglich, dass neben dem Temperaturschock auch der Druckschock oder während der Explosion entstehende, unbeständige Teilchen, die eine giftige Wirkung haben, zur Sterilisation der der Explosion ausgesetzten Oberflächen beitragen.

Das zu verwendende, explosive Gasgemisch besteht im wesentlichen aus einem gasförmigen Oxidationsmittel und einem leicht oxidierbaren Gas oder Dampf. Das Oxidationsmittel ist in den meisten Fällen reiner Sauerstoff oder der in Luft enthaltene Sauerstoff, der oxidierbare Bestandteil ist beispielsweise Wasserstoff, Methan, Methanol, Ethan, Propan, Ethyien, Propylen oder auch Chlor etc.

Die Stärke des Druckschockes, das heisst der maximal zu erwartende Druck, kann durch entsprechende Zusammensetzung des explosiven Gasgemisches gesteuert werden, das heisst an die durch den Blasvorgang gegebenen Bedingungen angepasst werden. Enthält das Gasgemisch nur die Reaktionspartner und zwar in einem stöchiometrischen Verhältnis, sind schockartige Druckerhöhungen um einen Faktor zehn oder mehr zu erwarten. Für weniger hohe Druckerhöhungen sind dem Gemisch inerte Gase zuzumischen.

Die in der Explosion entstehende Temperatur ist im wesentlichen von der bei der Oxydation frei werdenden Energie abhängig (das heisst von der Art der Reaktionspartner) und von der Wärmekapazität der Gasmischung. Diese Temperatur ist am höchsten, wenn das Gasgemisch nur die Reaktionspartner aufweist und zwar in einem für die Oxydation stöchiometrisch richtigen Verhältnis. In einer Knallgasexplosion, in der ein stöchiometrisches Knallgas explodiert wird, werden beispielsweise pro m³ (Normalbedingungen) des Gemisches 2 KW oder 7,2 MJ freigesetzt und werden Temperaturen bis zu 3000°C erreicht. Die freigesetzte Wärmemenge und damit die in der Explosion entstehende Temperatur, kann also ebenfalls gesteuert werden durch eine entsprechende Wahl der an der Explosion beteiligten Gase und/oder durch den Partialdruck dieser effektiven Reaktionsteilnehmer im Gasgemisch.

Die Druckverhältnisse nach der Explosion sind bei abgeschlossenem Vorformling abhängig von den Druckverhältnissen vor der Explosion, von den Temperaturverhältnissen vor und nach der Explosion, von der Volumenzunahme durch die Explosionsverformung, aber auch von der mengenmässigen Zusammensetzung des Gasgemisches und von der Art der chemischen Reaktionspartner.

Der Einfluss der Reaktionspartner ist bei gleicher Temperatur und gleichem Volumen vor und nach der Explosion der folgende: wenn durch die chemische Reaktion die Zahl der im Gasgemisch vorhandenen Teilchen steigt, bewirkt dies eine Druckerhöhung (bei gleichem Volumen und gleicher Temperatur); wenn die Zahl der Teilchen sinkt, bewirkt dies eine Druckerniedrigung. Wird beispielsweise Knallgas (Gemisch aus H₂ und O₂) als explosives Gasgemisch verwendet, läuft während der Explosion die Reaktion 2H₂ + O₂ → 2H₂O ab, das heisst es entstehen zwei Teilchen aus drei, wodurch der Druck nach der Explosion tiefer ist als vor der Explosion. Wird beispielsweise Methan und Sauerstoff als explosives Gasgemisch verwendet, läuft die Reaktion CH₄ + 2O₂ → CO₂ + 2H₂O ab, das heisst die Teilchenzahl bleibt gleich und der Druck nach der Explosion ist im wesentlichen gleich wie der Druck vor der Explosion. Wird als Gasgemisch Methanol und Sauerstoff verwendet, läuft die Reaktion 2CH₃OH + 3O₂ → 2CO₂ + 4H₂O ab, wobei die Teilchenzahl im Verhältnis fünf zu sechs zunimmt, das heisst der Druck nach der Explosion grösser ist als der Druck vor der Explosion.

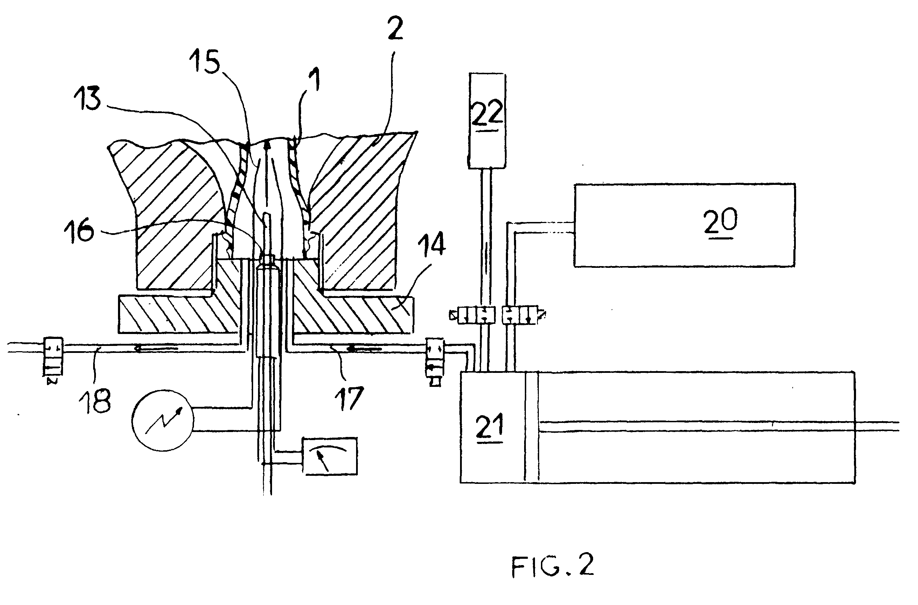

Die für das erfindungsgemässe Verfahren verwendete Form muss für den in der Explosion entstehenden Druck ausgelegt sein. Da auch bei entsprechenden Verfahren gemäss dem Stande der Technik ähnlich hohe Drücke zur Anwendung kommen, fällt dadurch an sich kein Mehraufwand an. Da das explosive Gasgemisch an sich ein Sicherheitsrisiko darstellt, ist es vorteilhaft, die Bestandteile des Gasgemisches erst unmittelbar vor dem durch die Explosion zu formenden Behälter miteinander zu mischen und/oder herzustellen (Knallgasgenerator 10 der Figur 2). Zur Vermeidung weiterer Sicherheitsrisiken werden vorteilhafterweise nicht-toxische Gase benutzt, die zu nicht-toxischen Oxydationsprodukten führen, wie beispielsweise Wasserstoff und Sauerstoff als explosives Gasgemisch, aus dem als Oxydationsprodukt Wasser entsteht.

Zur Zündung der Explosion wird beispielsweise ein in dem Behälter angeordneter Funkengenerator aktiviert, durch den im Gasgemisch eine örtliche Temperatur erzeugt wird, die für den Start der explosiven Kettenreaktion notwendig ist (für Knallgas min. 400°C). Bestimmte explosive Gasgemische sind auch durch eine entsprechend durchlässige Behälterwand hindurch durch Strahlung explodierbar, zum Beispiel Chlorknallgas (Cl₂ + O₂) durch Bestrahlung mit UV-Licht.

Anhand der folgenden Figuren soll eine beispielhafte, bevorzugte Variante des erfindungsgemässen Verfahrens zur Herstellung von streck-blas-geformten Kuststoffbehältern mehr im Detail beschrieben werden. Dabei zeigen:
- **Figur 1**: die aufeinanderfolgenden Phasen des erfindungsgemässen Verfahrens zur Herstellung einer Flasche aus PET anhand der vom Vorformling zum fertigen Behälter erfolgenden Formveränderung (Schnitte parallel zur Achse des Vorformlings bzw. des daraus entstehenden Behälters);
- **Figuren 2 und 3**: zwei beispielhafte Anordnung (im Schnitt) zur Durchführung der Verfahrensvariante gemäss Figur 1.

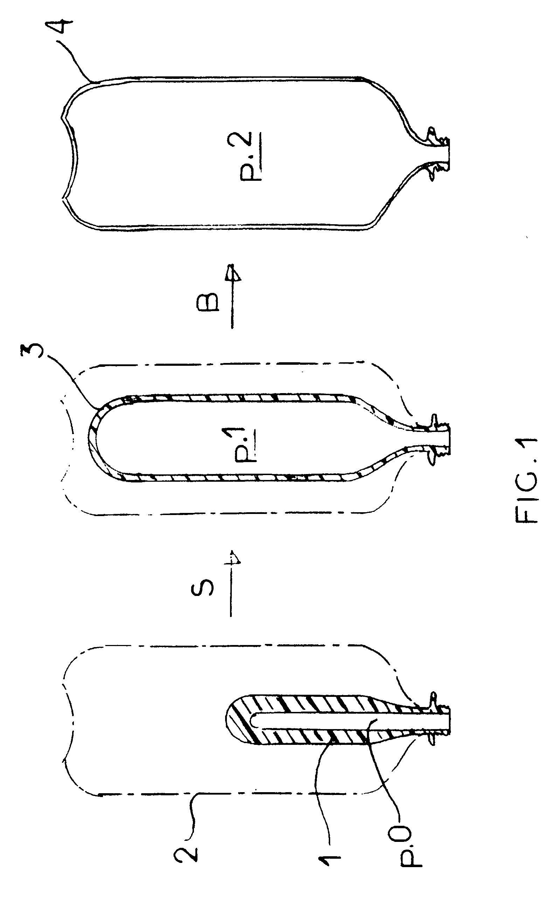

**Figuren 1 bis 3** zeigen eine bevorzugte Variante des erfindungsgemässen Verfahrens und zwei beispielhafte Anordnungen zur Durchführung dieser Verfahrensvariante. Es handelt sich dabei um die Herstellung von PET-Flaschen durch Streck-Blas-Formen eines entsprechenden Vorformlings unter Verwendung einer Knallgasexplosion.

**Figur 1** zeigt den Vorformling 1, von dem das erfindungsgemässe Verfahren ausgeht und der genau dem Vorformling entspricht, der verwendet wird für eine bekannte Streck-Blas-Formung einer vorgegebenen PET-Flasche. Der Vorformling 1 wird auf eine Temperatur von 100 - 120°C vorgewärmt und in die Form 2 eingebracht, wobei die Form eine Temperatur von ca. 20°C hat und den Vorformling in seinem Öffnungsbereich einspannt. Der Vorformling 1 wird mit Knallgas gefüllt und dieses wird derart verdichtet, dass sich der Druck im Vorformling vom Umgebungsdruck p.0 auf den für den Streckschritt S notwendigen Streckdruck p.1 von mindestens 2 bar, üblicherweise 5 bis 10 bar erhöht. Gleichzeitig wird der Vorformling 1 mit Hilfe eines Streckstempels (nicht dargestellt) gestreckt, wodurch ein Zwischenformling 3 entsteht. Die Zusammensetzung des verwendeten Knallgases ist für einen Streckdruck von 2 bar: stöchiometrisches Knallgas mit einem Partialdruck von ca. 1,1 bar und Argon mit einem Partialdruck von ca. 0,9 bar.

Sobald der Stempel seine vorgegebene Endposition (im wesentlichen gleich wie in einem Verfahren gemäss dem Stande der Technik) erreicht hat, wird mit einem im Vorformling angeordneten Zünder das Gasgemisch gezündet. Dabei entsteht ein Druckschock mit Drücken, die mindestens einem für das Blasformen des Behälters notwendigen Blasdruck p.2 entsprechen und im Bereiche von 40 bar liegen, und ein Temperaturschock mit Temperaturen im Bereiche von 600°C (gemessen an der inneren Behälteroberfläche) und wird die Wandung des Zwischenformlings 3 ganz an die Innenwand der Form 2 gepresst, wodurch, wie in einem bekannten Blasverfahren die Form der herzustellenden Flasche 4 erstellt wird.

Es zeigt sich, dass die nach dem erfindungsgemässen Verfahren hergestellte Flasche die gleichen Eigenschaften aufweist wie eine entsprechende Flasche, die nach einem Verfahren gemäss dem Stande der Technik hergestellt wurde, und dass ihre Innenoberflächen in Bezug auf Sterilität die für Nahrungsmittel und Getränke vorgeschriebenen Erfordernisse problemlos erfüllt. Dies heisst mit anderen Worten, dass weder die extrem hohe Geschwindigkeit des Druckaufbaus in der Explosion noch die Höhe der Temperaturen, die in der Explosion entstehen, einen negativen Einfluss auf das Material der Flaschenwandung haben, dass also mit dem bedeutend einfacheren, erfindungsgemässen Verfahren Behälter einer vorgegebenen Qualität ohne Probleme herstellbar sind.

**Figur 2** zeigt einen Teil einer sehr schematisch dargestellten Anordnung zur Durchführung der Verfahrensvariante, die im Zusammenhang mit der Figur 1 diskutiert wurde. Der zu einer Flasche zu formende Vorformling 1 ist in der Form 2 angeordnet und mit einem Anschlussstück 14 abgeschlossen. Das Anschlussstück 14 trägt einen in den Vorformling 1 reichenden Funkengenerator 15, eine Drucksonde 16, einen Gaseinlass 17 zur Zuführung des explosiven Gasgemisches und einen Gasablass 18 für den Druckausgleich. Ferner weist das Anschlussstück 14 eine Öffnung auf, durch die ein Streckstempel 13 geführt ist. Der Streckstempel wird für die Streckung durch einen nicht dargestellten Antrieb in den Vorformling 1 getrieben.

Für die Herstellung und Dosierung des explosiven Gasgemisches ist ein Knallgasgenerator 20 vorgesehen, in dem durch Elektrolyse von Wasser Wasserstoff und Sauerstoff in einem stöchiometrischen Mengenverhältnis hergestellt werden. Das Knallgas wird mittels eines Dosierzylinders 21 in den zu formenden Vorformling 1 dosiert und verdichtet. Für die Zumischung eines weiteren Gases (beispielsweise Methanol- oder Acetondampf oder Inertgas) zum Knallgas ist ein Vorratsbehälter 22 mit einer weiteren Zuführung zum Dosierzylinder 21 vorgesehen.

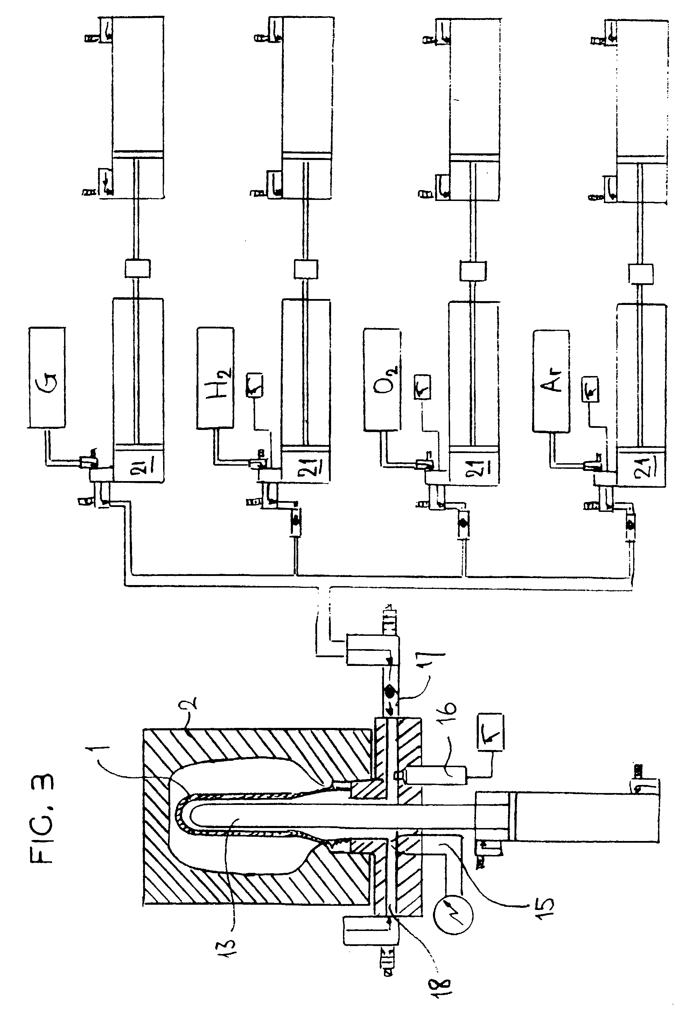

**Figur 3** zeigt eine ähnliche Anordnung wie Figur 2. Gleiche Teile sind auch mit gleichen Bezugsziffern bezeichnet. Im Gegensatz zu Figur 2 wird aber hier die explosive Gasmischung nicht aus einem Knallgasgenerator sondern aus drei Vorratsbehältern bezogen. Diese enthalten Wasserstoff H₂, Sauerstoff O₂ und Argon Ar. Die drei Komponenten des Gasgemisches werden wiederum mittels Dosierzylinder 21 nacheinander in den Vorformling 1 gepresst. Für ein weiteres Gas G, beispielsweise sterile Luft ist ein weiterer Vorratsbehälter und Dosierzylinder vorgesehen. Mit Hilfe dieser Zuführung wird nach der Explosion durch Zuführung von steriler Luft der Streckdruck aufrecherhalten, wodurch ein nachexplosives Schrumpfen des Behälters verhindert wird.

Die Anordnung gemäss Figur 3 kann für beliebige andere explosive Gasgemische angewendet werden mit oder ohne Zumischung eines inerten Gases.

## Patentansprüche

1. Verfahren zur Herstellung von Behältern aus einem durch Streck-Blasen verformbaren Kunststoffmaterial, gemäss welchem Verfahren ein auf eine für das Streck-Blasen geeignete Temperatur erwärmter Vorformling (1) in eine Form (2), deren Innenraum dem zu erstellenden Behälter (4) entspricht, eingebracht wird, gemäss welchem Verfahren im Vorformling (1) ein Streckdruck (p.1) erzeugt und der Vorformling (1) mit Hilfe eines Streckstempels (13) axial gestreckt wird und gemäss welchem Verfahren darauf im Vorformling ein Blasdruck (p.2), der höher ist als der Streckdruck (p.1) erzeugt wird, durch welchen Blasdruck (p.2) die Wand des Vorformlings (1) an die Innenwand der Form (2) gepresst wird und dadurch der Behälter (4) geformt wird, **dadurch gekennzeichnet**, dass der Streckdruck (p.1) im Vorformling (1) erzeugt wird, indem ein explosives Gasgemisch in den Vorformling (1) gepresst wird, und dass der Blasdruck (p.2) erzeugt wird, indem das explosive Gasgemisch gezündet wird.

2. Verfahren nach Anspruch 1, **dadurch gekennzeichnet**, dass nach der Explosion des explosiven Gasgemisches der Druck im Behälter zur Verhinderung von nachexplosiver Schrumpfung des Behälters auf dem Streckdruck (p.1) gehalten wird.

3. Verfahren nach Anspruch 2, **dadurch gekennzeichnet**, dass zur Erhaltung des Streckdruckes (p.1) sterile Luft in den geformten Behälter gepresst wird.

4. Verfahren nach einem der Ansprüche 1 bis 3, **dadurch gekennzeichnet**, dass das explosive Gasgemisch durch einen im Vorformling positionierten Funkengenerator (15) oder durch geeignete Strahlung von ausserhalb des Vorformlings gezündet wird.

5. Verfahren nach einem der Ansprüche 1 bis 4, **dadurch gekennzeichnet**, dass das explosive Gasgemisch als ein Oxidationsmittel Sauerstoff und als einen oxidierbaren Bestandteil Wasserstoff, Chlor, Methan, Methanol, Ethan, Ethylen, Propan oder Propylen enthält.

6. Verfahren nach einem der Ansprüche 1 bis 5, **dadurch gekennzeichnet**, dass die Komponenten des explosiven Gasgemisches nacheinander in den Vorformling gepresst werden.

7. Verfahren nach einem der Ansprüche 1 bis 5, **dadurch gekennzeichnet**, dass das explosive Gasgemisch Knallgas ist und dass dieses in einem Knallgasgenerator (20) unmittelbar vor der Explosion durch Elektrolyse aus Wasser hergestellt wird.

8. Verfahren nach einem der Ansprüche 1 bis 6, **dadurch gekennzeichnet**, dass dem explosiven Gasgemisch zur Steuerung von Temperatur- und Druckverlauf ein inertes Gas zugemischt wird.

9. Verfahren nach einem der Ansprüche 1 bis 7, **dadurch gekennzeichnet**, dass der Vorformling aus Polyethylenterephthalat besteht, dass das explosive Gasgemisch Knallgas mit stöchiometrischer Zusammensetzung ist und dass das Knallgas mit einem Streckdruck (p.1) von mindestens 2 bar in den Vorformling (1) gepresst wird.

10. Verfahren nach Anspruch 8, **dadurch gekennzeichnet**, dass dem Knallgas als inertes Gas Argon zugemischt wird.

11. Verfahren nach Anspruch 9, **dadurch gekennzeichnet**, dass das Knallgas im Vorformling (1) einen Partialdruck von ca. 1,1 bar und Argon einen Partialdruck von ca. 0,9 bar hat.

12. Verfahren nach einem der Ansprüche 9 bis 11, **dadurch gekennzeichnet**, dass der aus dem Vorformling (1) hergestellte Behälter (4) anschliessend unter sterilen Verhaltnissen einer Füllanlage zugefuhrt wird, in der er mit einem Nahrungsmittel oder Getränk gefüllt wird.

## Claims

1. A method for the production of containers from a material suitable for stretch blow molding wherein a preform (1) is heated to a temperature suitable for stretch blow molding and is introduced into a mold (2) having a cavity corresponding to the container (4) to be molded, wherein a stretching pressure (p.1) is created in the preform (1) and the preform (1) is stretched axially with the aid of a stretching rod (13) and wherein after stretching a blowing pressure (p.2) higher than the stretching pressure (p.1) is created in the stretched preform, pressing the wall of the preform (1) against the inner wall of the mold (2) such forming the container, **characterized** in that the stretching pressure (p.1) is created in the preform (1) by pressing an explosive gas mixture into the preform (1) and in that the blowing pressure (p.2) is created by exploding the explosive gas mixture.

2. Method according to claim 1, **characterized** in that after the explosion of the explosive gas mixture the pressure in the container is maintained at the stretching pressure (p.1) for preventing a post-explosive shrinking of the container.

3. Method according to claim 2, **characterized** in that for maintaining the stretching pressure (p.1), sterile air is pressed into the molded container.

4. Method according to one of claims 1 to 3, **characterized** in that the explosive gas mixture is ignited by means of a spark generator (15) positioned in the preform or by means of suitable radiation from outside the preform.

5. Method according to one of claims 1 to 4, **characterized** in that the explosive gas mixture contains oxygen as an oxidant and hydrogen, chlorine, methane, methanol, ethane, ethylene, propane or propylene as an oxidizable component

6. Method according to one of claims 1 to 5, **characterized** in that the components of the explosive gas mixture are pressed into the preform after each other.

7. Method according to one of claims 1 to 5, **characterized** in that the explosive gas mixture is oxyhydrogen and that it is produced directly before the explosion in an oxyhydrogen generator (20) by means of electrolysis of water.

8. Method according to one of claims 1 to 6, **characterized** in that an inert gas is added to the explosive gas mixture for controlling the development of temperature and pressure.

9. Method according to one of claims 1 to 7, **characterized** in that the preform consists of polyethyleneterephthalate, that the explosive gas mixture is oxyhydrogen having a stoichiometric composition and that the oxyhydrogen is pressed into the preform (1) with a stretching pressure (p.1) of at least 2 bar.

10. Method according to claim 9, **characterized** in that argon is added to the oxyhydrogen as inert gas.

11. Method according to claim 10, **characterized** in that the oxyhydrogen has a partial pressure of ca. 1.1 bar and argon has a partial pressure of ca. 0.9 bar in the preform (1).

12. Method according to one of claims 9 to 11, **characterized** in that the container (4) produced from the preform (1) is supplied to a filling plant under sterile conditions where it is filled with food or with a beverage.

## Revendications

1. Procédé de fabrication de contenants à partir d'une matière plastique pouvant être déformée par étirage-soufflage, procédé suivant lequel une préforme (1) chauffée à une température appropriée pour l'étirage soufflage est introduite dans un moule (2) dont l'espace intérieur correspond au contenant (4) à réaliser, procédé suivant lequel une pression d'étirage (p.1) est générée dans la préforme (1) et la préforme (1) est étirée axialement au moyen d'un poinçon d'étirage (13), et procédé suivant lequel une pression de soufflage (p.2) supérieure à la pression d'étirage (p.1) est ensuite générée dans la préforme, pression de soufflage (p.2) grâce à laquelle la paroi de la préforme (1) est comprimée contre la paroi intérieure du moule (2) et le contenant (4) est ainsi formé, caractérisé en ce que la pression d'étirage (p.1) est générée dans la préforme (1) en comprimant un mélange gazeux explosif dans la préforme (1) et en ce que la pression de soufflage (p.2) est générée en allumant le mélange gazeux explosif.

2. Procédé selon la revendication 1, caractérisé en ce que, après l'explosion du mélange gazeux explosif, la pression dans le contenant est maintenue à la valeur de la pression d'étirage (p. 1) afin d'éviter un retrait du contenant après l'explosion.

3. Procédé selon la revendication 2, caractérisé en ce que, pour maintenir la pression d'étirage (p.1), on comprime de l'air stérile dans le contenant formé.

4. Procédé selon l'une des revendications 1 à 3, caractérisé en ce que le mélange gazeux explosif est allumé au moyen d'un générateur d'étincelles (15) positionné dans la préforme ou par exposition à un rayonnement approprié de l'extérieur de la préforme.

5. Procédé selon l'une des revendications 1 à 4, caractérisé en ce que le mélange gazeux explosif contient comme agent oxydant de l'oxygène et comme composant oxydable de l'hydrogène, du chlore, du méthane, du méthanol, de l'éthane, de l'éthylène, du propane ou du propylène.

6. Procédé selon l'une des revendications 1 à 5, caractérisé en ce que les composants du mélange gazeux explosif sont comprimés les uns après les autres dans la préforme.

7. Procédé selon l'une des revendications 1 à 5, caractérisé en ce que le mélange gazeux explosif est un gaz détonant et en ce que ce dernier est produit par électrolyse à partir d'eau dans un générateur de gaz détonant (20) immédiatement avant l'explosion.

8. Procédé selon l'une des revendications 1 à 6, caractérisé en ce que l'on ajoute au mélange gazeux explosif un gaz inerte afin de réguler le profil de température et de pression.

9. Procédé selon l'une des revendications 1 à 7, caractérisé en ce que la préforme se compose de polytéréphtalate d'éthylène, en ce que le mélange gazeux explosif est un gaz détonant de composition stoechiométrique et en ce que le gaz détonant est comprimé dans la préforme (1) avec une pression d'étirage (p.1) d'au moins 2 bars.

10. Procédé selon la revendication 8, caractérisé en ce que l'on ajoute comme gaz inerte de l'argon au gaz détonant.

11. Procédé selon la revendication 9, caractérisé en ce que le gaz détonant dans la préforme (1) a une pression partielle d'environ 1,1 bars et l'argon une pression partielle d'environ 0,9 bar.

12. Procédé selon l'une des revendications 9 à 11, caractérisé en ce que le contenant (4) fabriqué à partir de la préforme (1) est amené ensuite en conditions stériles dans une installation de remplissage dans laquelle il est rempli avec un produit alimentaire ou une boisson.
